## Europäisches Patentamt
## European Patent Office
## Office européen des brevets

(11) Veröffentlichungsnummer: **0 191 920**
**A2**

(12) **EUROPÄISCHE PATENTANMELDUNG**

(21) Anmeldenummer: **85115422.9**

(22) Anmeldetag: **05.12.85**

(51) Int. Cl.⁴: **G 05 G 5/06**

(30) Priorität: 16.02.85 DE 8504358 U

(43) Veröffentlichungstag der Anmeldung:
27.08.86 Patentblatt 86/35

(84) Benannte Vertragsstaaten:
DE FR GB IT

(71) Anmelder: ROBERT BOSCH GMBH
Postfach 50
D-7000 Stuttgart 1(DE)

(72) Erfinder: Kötter, Wolfgang, Dipl.-Ing.
Hohe Anwande 26
D-7145 Markgröningen(DE)

(54) **Rasteinrichtung.**

(57) Eine Rasteinrichtung (10) hat eine Rastbuchse (13), an deren Innenwand mehrere parallel verlaufende Rastnuten (14, 15, 16) ausgebildet sind, die zum Einrasten von kugelförmigen Rastkörpern (21) dienen. Diese sind in Bohrungen (20) eines Führungskörpers (18) angeordnet und werden von einem von einer Feder (27) belasteten Spreizglied (23) jeweils in eine der Rastnuten gedrückt. Mit Hilfe eines ringförmigen Einlegeteils (29) ist z.B. eine der Ringnuten (15) blockiert, so daß die Rastkörper (21) in dieser Rastnut (15) nicht einrasten können. Dadurch ist die Rastbuchse (13) für verschiedene Bauteile verwendbar, wodurch sich ein Baukastensystem ergibt.

FIG. 1

EP 0 191 920 A2

R. 19865
7.2.1985 Sf/Pi

0191920

ROBERT BOSCH GMBH, 7000 STUTTGART 1


Rasteinrichtung

Stand der Technik

Die Erfindung geht aus von einer Rasteinrichtung nach der
Gattung des Hauptanspruchs. Bekannte Rasteinrichtungen bestehen aus einem hülsenartigen Körper, welcher in das Gehäuse eines Bauteils eingepaßt ist und an seinem Innenumfang als Ringnuten ausgebildete Rastnuten aufweist. Eine
derartige Rasteinrichtung hat den Nachteil, daß sie jeweils nur für ein ganz bestimmtes Bauteil mit einem verschiebbaren Teil mit entsprechender Ringnutenanzahl verwendbar ist. Abhängig von der Anzahl und der Lage der Raststellungen ist jeweils eine eigene Rasteinrichtung notwendig. Somit sind die Herstellung und der Materialaufwand sowie die Lagerhaltung für die Rasteinrichtungen verhältnismäßig aufwendig.

Vorteile der Erfindung

Die erfindungsgemäße Rasteinrichtung mit den kennzeichnenden
Merkmalen des Hauptanspruchs hat demgegenüber den Vorteil,
daß ein sogenanntes Baukastensystem aufbaubar ist. Für unterschiedliche verschiebbare Teile ist ein einziger Rastkörper mit gleicher Anzahl von Rastnuten verwendbar. Es ist so-

...

mit eine Einsparung sich voneinander unterscheidender Rastkörper möglich. Alle nicht benötigten Rastrillen können auf
einfache Art durch ein Einlegeteil blockiert werden, wodurch eine große Variantenbildung möglich ist. Erst bei der
Endmontage wird das blockierende Einlegeteil eingebaut, so
daß die Rasteinrichtung leicht den gewünschten Erfordernissen anpaßbar ist.

Durch die in den Unteransprüchen aufgeführten Maßnahmen sind
vorteilhafte Weiterbildungen und Verbesserungen der im Hauptanspruch angegebenen Merkmale möglich.

Zeichnung

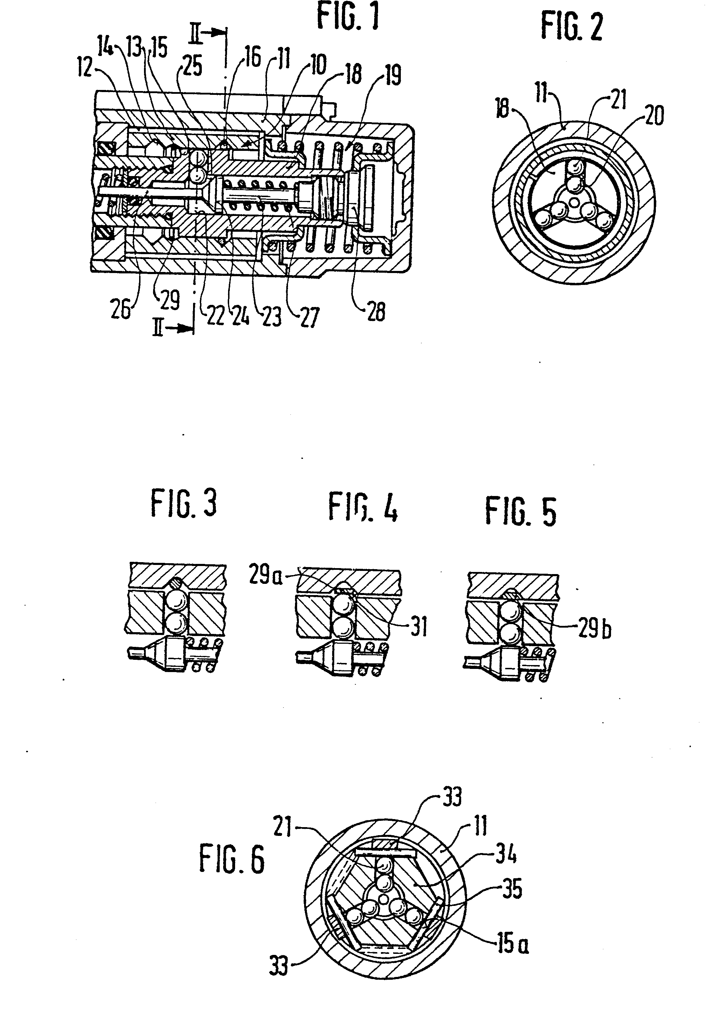

Ein Ausführungsbeispiel der Erfindung ist in der Zeichnung
dargestellt und in der nachfolgenden Beschreibung näher erläutert. Es zeigen Figur 1 einen Längsschnitt durch eine
Rasteinrichtung, Figur 2 einen Schnitt in Richtung II-II
nach Figur 1, Figur 3 eine Einzelheit, Figur 4 und 5 je eine Abwandlung der Einzelheit nach Figur 3 und Figur 6 eine
Abwandlung des Ausführungsbeispiels nach Figur 1.

Beschreibung des Ausführungsbeispiels

Die Rasteinrichtung 10 nach Figur 1 hat ein rohrförmiges Gehäuse 11, das an einer nicht dargestellten Verstelleinrichtung z.B. für einen Steuerschieber eines Wegeventils angeflanscht ist. Die Rasteinrichtung 10 hat eine dem Innenraum
12 des Gehäuses 11 angepaßte Rastbuchse 13, an deren Innenumfang sich als Ringnuten ausgebildete, parallel verlaufende
Rastnuten 14, 15, 16 befinden. Diese haben dreieckförmigen
Querschnitt, der Nutgrund ist jeweils leicht gerundet. In
der Rastbuchse 13 ist ein Führungskörper 18 beweglich angeordnet, der mit einer doppeltwirkenden Rückholeinrichtung 19
in Wirkverbindung steht. Wie in Figur 2 näher gezeigt, sind
im Führungskörper 18 im Abstand von ca. 120$^{o}$ drei radial ver-

laufende Bohrungen 20 ausgebildet, in denen jeweils zwei Rastkugeln 21 angeordnet sind. In einer etwa mittigen Längsbohrung 22 des Führungskörpers 18 ist ein Spreizglied 23 geführt. Es hat einen Bund 24, der auf der der Verstelleinrichtung zugewandten Seite eine Schräge 25 und außerdem auf dieser Seite einen Führungsstift 26 aufweist. Auf der anderen Seite des Bundes 24 des Spreizglieds 23 liegt das Ende einer Druckfeder 27 an, die sich mit ihrem anderen Ende an einen Abschlußstopfen 28 des Führungskörpers 18 anlegt. Ferner ist in den Rastnuten 15 und 16 je ein ringförmiges Einlegeteil 29 so angeordnet, daß es nicht über die Innenwand des Rastkörpers 13 hinausragt.

Wird der Führungskörper 18 in der Rastbuchse 13 in Längsrichtung hin- und herbewegt, z.B. in der Figur nach links verschoben, so gleiten die Rastkugeln 21 entlang der Innenwand der Rastbuchse 13. Sind die Bohrungen 20 des Führungskörpers 18 und die Rastnut 14 deckungsgleich, so wird das Spreizglied 23 durch die Kraft der Druckfeder 27 nach links verschoben. Dabei gleiten die Rastkugeln 21 entlang der Schräge 25 des Bundes 24 und werden dadurch in die Rastnut 14 hineingedrückt. Liegt die innere der beiden Rastkugeln 21 am Außenumfang des Bundes 24 an, so ist die äußere Rastkugel bis zum Nutgrund in die Rastnut 14 eingedrungen. Die Vorspannung der Druckfeder 27 ist dabei so groß, daß die Rückholeinrichtung 19 den gerasteten Führungskörper 18 nicht zurückstellen kann. Die Rasteinrichtung 10 ist somit in ihrer Position fixiert.

Befinden sich nun die Bohrungen 20 - wie in Figur 3 näher dargestellt - im Bereich der Rastnuten 15 oder 16, in denen ein Einlegeteil 29 angeordnet ist, so kann die äußere Rastkugel 21 nicht in diese Rastnuten 15, 16 eindringen. Das Einlegeteil 29 ist dabei so ausgebildet, daß es nicht über die Innenwand hinausragt, so daß ein einwandfreies Gleiten des Führungskörpers 18 in der Rastbuchse 13 möglich ist.

...

Ferner muß es aber auch so groß sein, daß die äußeren Rastkugeln 21 nicht mehr in die Rastnuten 15 bzw. 16 einrasten. Ein
teilweises Einrasten der Rastkugeln 21 ist zu verhindern, um
eine ruckartige Bewegung des Führungskörpers 18 durch die
Rückholeinrichtung 19 zu vermeiden.

In Figur 4 ist eine Abwandlung des Einlegeteils dargestellt.
Das Einlegeteil 29a weist einen rechteckigen Querschnitt auf,
wobei dessen Länge und Tiefe so aufeinander abgestimmt sind,
daß seine Innenwand mit der Innenwand der Rastbuchse 13 abschließt. Ferner ist aber die Länge so auszubilden, daß die
Rastkugeln 21 nicht teilweise in einen Bereich 31 zwischen
dem Einlegeteil 29a und der Wand der Ringnut einrasten können.

Eine zweite Abwandlung des Einlegeteils ist in Figur 5 dargestellt. Das Einlegeteil 29b weist einen kegelstumpfförmigen Querschnitt auf. Seine Innenwand schließt wieder mit
der Innenwand der Rastbuchse 13 ab. Entsprechend der wirkenden Betätigungskraft der Druckfeder 27 und der Rückholeinrichtung 19 ist die Tiefe des Einlegeteils 29b ausgelegt. Je
größer die wirkende Kraft ist, desto tiefer sollte das Einlegeteil 29b sein.

In Figur 6 sind statt der Rastbuchse 13 drei Rastleisten 33
radial im Abstand von 120° an der Innenwand des Gehäuses 11
angeordnet. Selbstverständlich weist dann auch der Führungskörper 34 keinen kreisförmigen Querschnitt auf sondern hier
einen sechseckigen Querschnitt. Die drei identischen Rastleisten 33 weisen wieder Rastnuten 15a auf. Als Einlegeteile
sind sowohl wieder ein Drahtring als auch vorteilhafterweise
Rollen 35 oder kleine Drahtstücke möglich. Die Rollen 35 sind
in die in einer Ebene liegenden Rastnuten eingelegt, so daß
wieder diese Rastnuten 15a blockiert sind, und die Rastkugeln
21 nicht in die Rastnuten 15a einrasten können.

R. 19865
7.2.1985 Sf/Pi

0191920

FOBERT BOSCH GMBH, 7000 STUTTGART 1

Ansprüche

1. Rasteinrichtung (10) für verschiebbare Teile, wie Steuerschieber von Wegeventilen und dergleichen, mit mindestens zwei in einer quer zur Längsrichtung des verschiebbaren Teils verlaufenden Ebene liegenden Rastelemente (21), die in Ausnehmungen (20) am verschiebbaren Teil und in Ausnehmungen (14) an einem gehäusefesten Rastkörper (13) einzugreifen vermögen, dadurch gekennzeichnet, daß in mindestens einer der Ausnehmungen (14) an dem gehäusefesten Rastkörper (13) ein Einlegeteil (29) angeordnet ist, das höchstens bis zur Innenwand des Rastkörpers (13) reicht.

2. Einrichtung nach Anspruch 1, dadurch gekennzeichnet, daß das Einlegeteil (29) als Ring ausgebildet ist.

3. Einrichtung nach Anspruch 1 und/oder 2, dadurch gekennzeichnet, daß das Einlegeteil (29) einen kreisförmigen Querschnitt hat, dessen Außendurchmesser so groß ist, daß es etwa im Grund der Ausnehmung (14) anliegt.

4. Einrichtung nach Anspruch 1, dadurch gekennzeichnet, daß das Einlegeteil (29a) ein im Querschnitt etwa rechteckiges Profil aufweist, dessen Länge und Tiefe so aufeinander abgestimmt sind, daß es höchstens bis zur Innenwand des Rastkörpers (13) reicht.

...

5. Einrichtung nach Anspruch 1. dadurch gekennzeichnet, daß das Einlegeteil (29b) ein im Querschnitt etwa kegelstumpfförmiges Profil aufweist, dessen schräge Kanten sich an die Wand der Ausnehmung (14) anlegen.

6. Einrichtung nach Anspruch 1, dadurch gekennzeichnet, daß das Einlegeteil aus mehreren Rollen (35) besteht.

1/1

0191920

FIG. 1

FIG. 2

FIG. 3    FIG. 4    FIG. 5

FIG. 6